# EUROPEAN PATENT SPECIFICATION

(11) **EP 3 637 245 B1**
(45) Date of publication and mention of the grant of the patent: **11.08.2021**
(21) Application number: 19203040.1
(22) Date of filing: 09.09.2014
(51) Int. Cl.: H04L 29/06, H04W 12/126, G06Q 30/06, G06Q 30/04, G06F 21/62

(54) **AUTHENTICATION SYSTEMS AND METHODS FOR ON-DEMAND PRODUCTS**
AUTHENTIFIZIERUNGSSYSTEME UND -VERFAHREN FÜR ON-DEMAND-PRODUKTE
SYSTÈMES ET PROCÉDÉS D'AUTHENTIFICATION DE PRODUITS SUR DEMANDE

(30) Priority: 10.09.2013 US 201361876086 P
(43) Date of publication of application: 15.04.2020
(62) Divisional of application: 14843372.5
(73) Proprietor: CSidentity Corporation, Austin TX 78746 (US)
(72) Inventor: CHAPA, Isaac, Austin, TX Texas 78704 (US); HATLEY, Steven, Round Rock, TX Texas 78681 (US); ROSS, Joe, Austin, TX Texas 78703 (US)
(74) Representative: Murgitroyd & Company

(56) References cited:
- US-A1- 2002 087 460
- US-A1- 2002 091 544
- US-A1- 2009 106 846

## Description

### CROSS-REFERENCE TO RELATED APPLICATIONS

This patent application claims priority from U.S. Provisional Patent Application No. 61/876,086.

### BACKGROUND

### Technical Field

The present disclosure relates generally to computer processing and more particularly, but not by way of limitation, to authentication systems and methods for on-demand products.

### History Of Related Art

Numerous computer systems exist that provide on-demand products to consumers. For purposes of this patent application, an *on-demand product* is a product that is requested by a requestor such as a consumer and is intended by a provider to be delivered in real-time or in near real-time. On-demand products are generally requested electronically over a communications network such as, for example, public or private intranets, a public switched telephone network (PSTN), a cellular network, the Internet, or the like. Examples of on-demand products include content such as, for example, text, graphics, photos, video, audio, code, software applications, documents, access to cloud applications, and the like. On-demand products can also include content streaming, for example, of video, audio, and the like. By way of further example, on-demand products may include services such as, for example, identity-monitoring services. Relevant prior-art is known from US 2009/106846. In general, on-demand products are not, *inter alia,* physically shipped or delivered. Rather, on-demand products are typically delivered electronically over a communications network or by initiating a requested service. Oftentimes, however, it can be difficult to provide on-demand products efficiently and securely.

In addition, traditionally, systems that provide on-demand products bill for the on-demand product soon after a consumer has made a binding request for the on-demand product, for example, by requesting or enrolling for the on-demand product and providing payment information. When various complexities cause the on-demand product to not be delivered, a consumer is usually still charged for the on-demand product. As consumer- protection laws and regulations proliferate worldwide, such billing practices can carry significant risk.

### SUMMARY OF THE INVENTION

In one embodiment, a method is performed by a computer system. The method includes receiving, from a requestor, a request for an on-demand identity product in relation to an identity of a consumer, the request comprising personally identifying information (PII) of the consumer. The method also includes executing, using the PII, a partial registration of the consumer for the on-demand identity product, the partial registration omitting satisfaction of at least one security requirement. The at least one security requirement includes a requirement that the requestor be authenticated as having an asserted identity. The method additionally includes determining whether delayed authentication is enabled for the on-demand identity product. Moreover, the method includes, responsive to a determination that delayed authentication is enabled for the on-demand identity product: conditionally suspending the at least one security requirement; initiating provision of the on-demand identity product to the requestor, the provision comprising processing data related to the identity of the consumer; and restricting the requestor's access to determined sensitive data resulting from the initiated provision at least until the at least one security requirement is satisfied.

In one embodiment, an identity-product provision system includes at least one processing unit. The at least one processing unit is operable to perform a method. The method includes receiving, from a requester, a request for an on-demand identity product in relation to an identity of a consumer, the request comprising personally identifying information (PII) of the consumer. The method also includes executing, using the PII, a partial registration of the consumer for the on-demand identity product, the partial registration omitting satisfaction of at least one security requirement. The at least one security requirement includes a requirement that the requestor be authenticated as having an asserted identity. The method additionally includes determining whether delayed authentication is enabled for the on-demand identity product. Moreover, the method includes, responsive to a determination that delayed authentication is enabled for the on-demand identity product: conditionally suspending the at least one security requirement; initiating provision of the on-demand identity product to the requestor, the provision comprising processing data related to the identity of the consumer; and restricting the requestor's access to determined sensitive data resulting from the initiated provision at least until the at least one security requirement is satisfied.

In one embodiment, a computer-program product includes a non-transitory computer-usable medium having computer-readable program code embodied therein. The computer-readable program code adapted to be executed to implement a method. The method includes receiving, from a requestor, a request for an on-demand identity product in relation to an identity of a consumer, the request comprising personally identifying information (PII) of the consumer. The method also includes executing, using the PII, a partial registration of the consumer for the on-demand identity product, the partial registration omitting satisfaction of at least one security requirement. The at least one security requirement includes a requirement that the requestor be authenticated as having an asserted identity. The method additionally includes determining whether delayed authentication is enabled for the on-demand identity product. Moreover, the method includes, responsive to a determination that delayed authentication is enabled for the on-demand identity product: conditionally suspending the at least one security requirement; initiating provision of the on-demand identity product to the requestor, the provision comprising processing data related to the identity of the consumer; and restricting the requestor's access to determined sensitive data resulting from the initiated provision at least until the at least one security requirement is satisfied.

### BRIEF DESCRIPTION OF THE DRAWINGS

A more complete understanding of the method and apparatus of the present disclosure may be obtained by reference to the following Detailed Description when taken in conjunction with the accompanying Drawings wherein:
FIG. 1 illustrates an example of a system that can be used for on-demand product provision;
FIG. 2 illustrates an example of a system that can be used for provision and billing of on-demand identity products;
FIG. 3 illustrates an example of a process for performing delayed authentication; and
FIG. 4 illustrates an example of a process for delayed billing.

### DETAILED DESCRIPTION

The invention is defined in the independent claims 1, 7 and 8. In various embodiments, on-demand products can be provided by a computer system over a network. In certain embodiments, an on-demand product may receive, generate, or otherwise process sensitive data. For purposes of this patent application, *sensitive data* can include any data not intended for public dissemination such as, for example, data considered classified, confidential, personal, and/or the like. A primary purpose of some on-demand products may be to make sensitive data accessible to requestors of the on-demand products.

For purposes of this patent application, *providing* or *delivering* an on-demand product refers to automated actions by a computer system to fulfill a request for the on-demand product. For example, for various types of on-demand products, providing or delivering the on-demand products can include transmitting, streaming, or initializing the on-demand product. For various types of on-demand products, providing or delivering the on-demand products can also include, for example, making the on-demand products accessible to consumers for transmission or streaming thereto.

One example of an on-demand product is an on-demand identity product. An *on-demand identity product,* as used herein, is an on-demand product as defined above that may be used to facilitate discovery or prevention of identity theft. Identity theft generally involves a use of personally identifying information (PII) that is not authorized by an owner of the PII and can include, for example, an unauthorized change to PII or an unauthorized use of PII to access resources or to obtain credit or other benefits. PII, as used herein, refers to information that can be used to uniquely identify, contact, or locate an individual person or can be used with other sources to uniquely identify, contact, or locate an individual person. PII may include, but is not limited to, social security numbers (SSNs), bank or credit card account numbers, passwords, birth dates, and addresses.

Identity products can include, for example, credit products. For purposes of this patent application, a *credit product* is an on-demand identity product as defined above that pertains to receiving, acquiring, reporting on, monitoring, or otherwise acting upon information related to consumer credit files. On-demand identity products that are not credit products may be referenced herein as *non-credit products.* Non-credit products can include monitoring and/or reporting services relating, for example, to exchanges of PII over the Internet, aliases associated with social-security numbers, sex-offender registries, payday loans, changes of address, and the like. After reviewing the present disclosure, one skilled in the art will appreciate that, in many cases, on-demand identity products may receive, generate, or otherwise process sensitive data as a fundamental part of their operation. In addition, a primary purpose of such on-demand identity products is often to provide reports, alerts, and/or other information relating to a consumer's identity. This information can include, or itself be, sensitive data.

One way to ensure the security of sensitive data is to require authentication as a prerequisite to providing an on-demand product. In so doing, it may be ensured that sensitive data is not presented or made accessible to unauthorized parties. For example, a requestor may provide PII sufficient to register a consumer for identity or credit monitoring. In general, the requestor asserts an identity that is authorized to register the consumer such as, for example, the consumer's identity, an identity of a parent or legal guardian of the consumer, and/or the like. In an example, if the requestor asserts to be the consumer, authentication may involve authenticating that the requestor is the consumer (*i.e.,* that the requestor owns the provided PII). Examples of authentication that may be performed are described in U.S. Patent No. 7,340,042 and U.S. Patent Application No. 13/093,664.

In many cases, performing authentication as a prerequisite to providing an on-demand product as described above can have certain disadvantages. For example, this approach can be a performance bottleneck. Authentication can be a time-consuming and computationally-expensive process and, in general, the time spent authenticating results in time not spent providing the on-demand product. In addition, authentication can often fail due to technical issues, incomplete or inaccurate information from the requestor, or other non-fraudulent reasons. Overall, authentication can be a significant consumer of time and resources. This can cause a diminished end-user experience for the requestor. In some cases, the diminished end-user experience may be measured, for example, by end-to-end response time, abandoned registrations, and/or other performance metrics. The approach described above can also result in computer-resource waste due, for example, to the resource cost of abandoned registrations, resuming incomplete registrations, etc.

The present disclosure describes examples of computationally efficient authentication. In various embodiments, a computer system can include a configuration option for an on-demand product that allows requestor authentication to be delayed without delaying provision of the on-demand product. For example, in some embodiments, provision of the on-demand product can be initiated substantially immediately after other registration information is obtained. In certain embodiments, if delayed authentication is enabled via the configuration option, a requirement that the requestor be authenticated can be conditionally suspended. Stated somewhat differently, the computer system can allow restricted access to the on-demand product conditioned upon, for example, whether data to be presented or made accessible is deemed sensitive. Satisfaction of the requirement can be delayed, for example, until such a time that data deemed sensitive is to be presented or made accessible to the requestor.

In addition, the present disclosure describes examples of more efficiently billing for on-demand products. In a typical embodiment, a product-provision system is operable to configurably delay when consumers are billed for on-demand products in accordance with delayed-billing settings. As used herein, *delayed-billing settings* refer to one or more sets of criteria for determining whether a consumer can be billed for an on-demand product at a given point in time. For purposes of this patent application, billing refers to initiating payment extraction via provided payment information. Billing can include, for example, charging a credit line (*e.g.,* a credit card), initiating a bank draft, applying a credit, debiting an account, or the like. Billing can also include, for example, authorizing a third-party to charge a credit line, initiate a bank draft, apply a credit, debit an account, or the like.

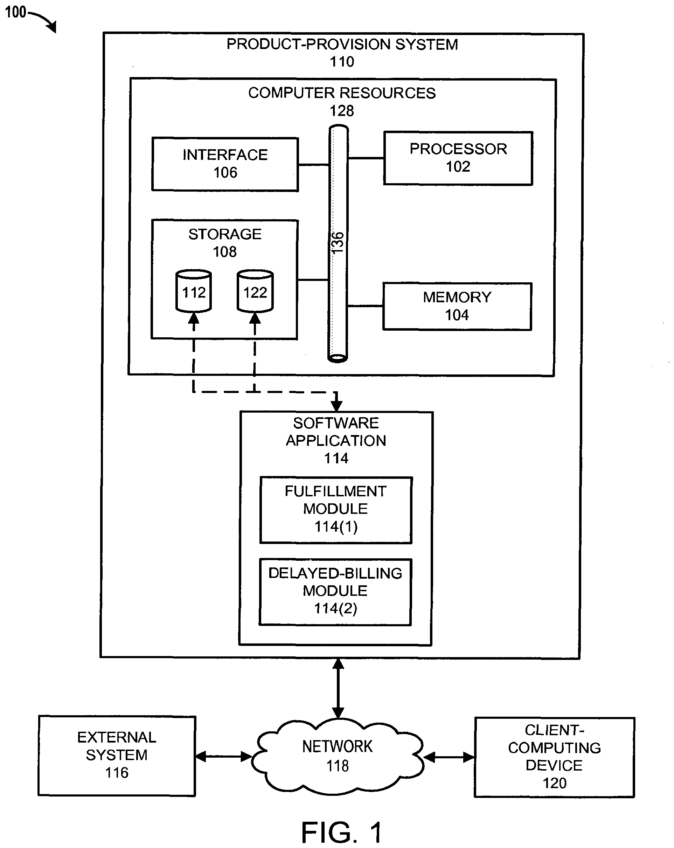

FIG. 1 illustrates an example of a system 100 that can be used for on-demand product provision. The system 100 includes a product-provision system 110, one or more external systems 116, and one or more client-computing devices 120. The product-provision system 110 is operable to communicate with the one or more external systems 116 and the one or more client-computing devices 120 over a network 118.

The product-provision system 110 includes a software application 114 operable to execute on computer resources 128. In particular embodiments, the product-provision system 110 may perform one or more steps or blocks of one or more methods described or illustrated herein. In particular embodiments, one or more computer systems may provide functionality described or illustrated herein. In particular embodiments, encoded software running on one or more computer systems may perform one or more steps or blocks of one or more methods described or illustrated herein or provide functionality described or illustrated herein.

The components of the product-provision system 110 may comprise any suitable physical form, configuration, number, type and/or layout. As an example, and not by way of limitation, the product-provision system 110 may comprise an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a wearable or body-borne computer, a server, or a combination of two or more of these. Where appropriate, the product-provision system 110 may include one or more computer systems; be unitary or distributed; span multiple locations; span multiple machines; or reside in a cloud, which may include one or more cloud components in one or more networks.

In the depicted embodiment, the product-provision system 110 includes a processor 102, memory 104, storage 108, interface 106, and bus 136. Although a particular product-provision system is depicted having a particular number of particular components in a particular arrangement, this disclosure contemplates any suitable product-provision system having any suitable number of any suitable components in any suitable arrangement.

Processor 102 may be a microprocessor, controller, or any other suitable computing device, resource, or combination of hardware, software and/or encoded logic operable to execute, either alone or in conjunction with other components, (e.g., memory 104), the software application 114. Such functionality may include providing various features discussed herein. In particular embodiments, processor 102 may include hardware for executing instructions, such as those making up the software application 114. As an example and not by way of limitation, to execute instructions, processor 102 may retrieve (or fetch) instructions from an internal register, an internal cache, memory 104, or storage 108; decode and execute them; and then write one or more results to an internal register, an internal cache, memory 104, or storage 108.

In particular embodiments, processor 102 may include one or more internal caches for data, instructions, or addresses. This disclosure contemplates processor 102 including any suitable number of any suitable internal caches, where appropriate. As an example and not by way of limitation, processor 102 may include one or more instruction caches, one or more data caches, and one or more translation lookaside buffers (TLBs). Instructions in the instruction caches may be copies of instructions in memory 104 or storage 108 and the instruction caches may speed up retrieval of those instructions by processor 102. Data in the data caches may be copies of data in memory 104 or storage 108 for instructions executing at processor 102 to operate on; the results of previous instructions executed at processor 102 for access by subsequent instructions executing at processor 102, or for writing to memory 104, or storage 108; or other suitable data. The data caches may speed up read or write operations by processor 102. The TLBs may speed up virtual-address translations for processor 102. In particular embodiments, processor 102 may include one or more internal registers for data, instructions, or addresses. Depending on the embodiment, processor 102 may include any suitable number of any suitable internal registers, where appropriate. Where appropriate, processor 102 may include one or more arithmetic logic units (ALUs); be a multi-core processor; include one or more processors 102; or any other suitable processor.

Memory 104 may be any form of volatile or non-volatile memory including, without limitation, magnetic media, optical media, random access memory (RAM), read-only memory (ROM), flash memory, removable media, or any other suitable local or remote memory component or components. In particular embodiments, memory 104 may include random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM, or any other suitable type of RAM or memory. Memory 104 may include one or more memories 104, where appropriate. Memory 104 may store any suitable data or information utilized by the product-provision system 110, including software embedded in a computer readable medium, and/or encoded logic incorporated in hardware or otherwise stored (e.g., firmware). In particular embodiments, memory 104 may include main memory for storing instructions for processor 102 to execute or data for processor 102 to operate on. In particular embodiments, one or more memory management units (MMUs) may reside between processor 102 and memory 104 and facilitate accesses to memory 104 requested by processor 102.

As an example and not by way of limitation, the product-provision system 110 may load instructions from storage 108 or another source (such as, for example, another computer system) to memory 104. Processor 102 may then load the instructions from memory 104 to an internal register or internal cache. To execute the instructions, processor 102 may retrieve the instructions from the internal register or internal cache and decode them. During or after execution of the instructions, processor 102 may write one or more results (which may be intermediate or final results) to the internal register or internal cache. Processor 102 may then write one or more of those results to memory 104. In particular embodiments, processor 102 may execute only instructions in one or more internal registers or internal caches or in memory 104 (as opposed to storage 108 or elsewhere) and may operate only on data in one or more internal registers or internal caches or in memory 104 (as opposed to storage 108 or elsewhere).

In particular embodiments, storage 108 may include mass storage for data or instructions. As an example and not by way of limitation, storage 108 may include a hard disk drive (HDD), a floppy disk drive, flash memory, an optical disc, a magneto-optical disc, magnetic tape, or a Universal Serial Bus (USB) drive or a combination of two or more of these. Storage 108 may include removable or non-removable (or fixed) media, where appropriate. Storage 108 may be internal or external to the product-provision system 110, where appropriate. In particular embodiments, storage 108 may be non-volatile, solid-state memory. In particular embodiments, storage 108 may include read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. Storage 108 may take any suitable physical form and may comprise any suitable number or type of storage. Storage 108 may include one or more storage control units facilitating communication between processor 102 and storage 108, where appropriate.

In particular embodiments, interface 106 may include hardware, encoded software, or both providing one or more interfaces for communication (such as, for example, packet-based communication) among any networks, any network devices, and/or any other computer systems. As an example and not by way of limitation, communication interface 106 may include a network interface controller (NIC) or network adapter for communicating with an Ethernet or other wire-based network and/or a wireless NIC (WNIC) or wireless adapter for communicating with a wireless network.

Depending on the embodiment, interface 106 may be any type of interface suitable for any type of network for which product-provision system 110 is used. As an example and not by way of limitation, product-provision system 110 can include (or communicate with) an ad-hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, product-provision system 110 can include (or communicate with) a wireless PAN (WPAN) (such as, for example, a BLUETOOTH WPAN), a WI-FI network, a WI-MAX network, an LTE network, an LTE-A network, a cellular telephone network (such as, for example, a Global System for Mobile Communications (GSM) network), or any other suitable wireless network or a combination of two or more of these. The product-provision system 110 may include any suitable interface 106 for any one or more of these networks, where appropriate.

In some embodiments, interface 106 may include one or more interfaces for one or more I/O devices. One or more of these I/O devices may enable communication between a person and the product-provision system 110. As an example and not by way of limitation, an I/O device may include a keyboard, keypad, microphone, monitor, mouse, printer, scanner, speaker, still camera, stylus, tablet, touchscreen, trackball, video camera, another suitable I/O device or a combination of two or more of these. An I/O device may include one or more sensors. Particular embodiments may include any suitable type and/or number of I/O devices and any suitable type and/or number of interfaces 106 for them. Where appropriate, interface 106 may include one or more drivers enabling processor 102 to drive one or more of these I/O devices. Interface 106 may include one or more interfaces 106, where appropriate.

Bus 136 may include any combination of hardware, software embedded in a computer readable medium, and/or encoded logic incorporated in hardware or otherwise stored (e.g., firmware) to couple components of the product-provision system 110 to each other. As an example and not by way of limitation, bus 136 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCI-X) bus, a serial advanced technology attachment (SATA) bus, a Video Electronics Standards Association local (VLB) bus, or any other suitable bus or a combination of two or more of these. Bus 136 may include any number, type, and/or configuration of buses 136, where appropriate. In particular embodiments, one or more buses 136 (which may each include an address bus and a data bus) may couple processor 102 to memory 104. Bus 136 may include one or more memory buses.

Herein, reference to a computer-readable storage medium encompasses one or more tangible computer-readable storage media possessing structures. As an example and not by way of limitation, a computer-readable storage medium may include a semiconductor-based or other integrated circuit (IC) (such, as for example, a field-programmable gate array (FPGA) or an application-specific IC (ASIC)), a hard disk, an HDD, a hybrid hard drive (HHD), an optical disc, an optical disc drive (ODD), a magneto-optical disc, a magneto-optical drive, a floppy disk, a floppy disk drive (FDD), magnetic tape, a holographic storage medium, a solid-state drive (SSD), a RAM-drive, a SECURE DIGITAL card, a SECURE DIGITAL drive, a flash memory card, a flash memory drive, or any other suitable tangible computer-readable storage medium or a combination of two or more of these, where appropriate.

Particular embodiments may include one or more computer-readable storage media implementing any suitable storage. In particular embodiments, a computer-readable storage medium implements one or more portions of processor 102 (such as, for example, one or more internal registers or caches), one or more portions of memory 104, one or more portions of storage 108, or a combination of these, where appropriate. In particular embodiments, a computer-readable storage medium implements RAM or ROM. In particular embodiments, a computer-readable storage medium implements volatile or persistent memory. In particular embodiments, one or more computer-readable storage media embody encoded software.

Herein, reference to encoded software may encompass one or more applications, bytecode, one or more computer programs, one or more executables, one or more instructions, logic, machine code, one or more scripts, or source code, and vice versa, where appropriate, that have been stored or encoded in a computer-readable storage medium. In particular embodiments, encoded software includes one or more application programming interfaces (APIs) stored or encoded in a computer-readable storage medium. Particular embodiments may use any suitable encoded software written or otherwise expressed in any suitable programming language or combination of programming languages stored or encoded in any suitable type or number of computer-readable storage media. In particular embodiments, encoded software may be expressed as source code or object code. In particular embodiments, encoded software is expressed in a higher-level programming language, such as, for example, C, Perl, or a suitable extension thereof. In particular embodiments, encoded software is expressed in a lower-level programming language, such as assembly language (or machine code). In particular embodiments, encoded software is expressed in JAVA. In particular embodiments, encoded software is expressed in Hyper Text Markup Language (HTML), Extensible Markup Language (XML), or other suitable markup language.

In a typical embodiment, the product-provision system 110 is operable to provide on-demand products to requestors and implement delayed billing for the on-demand products. The functionality of the product-provision system 110 can be facilitated by the software application 114. In certain embodiments, the software application 114 is operable to execute on the product-provision system 110 in the fashion described above. The software application 114 can include, for example, a fulfillment module 114(1) and a delayed-billing module 114(2).

In general, the fulfillment module 114(1) can logically encapsulate software that is operable to generate, acquire, and/or provide the on-demand products to requestors thereof. The on-demand products provisioned via the fulfillment module 114(1) may be selected from a number of categories such as, for example, text, graphics, photos, video, audio, code, software applications, documents, access to cloud applications, and the like. The on-demand products can also include content streaming, for example, of video, audio, and the like. By way of further example, on-demand products may include services such as, for example, monitoring services. Other examples of on-demand products will be apparent to one of ordinary skill in the art after reviewing the inventive principles contained herein.

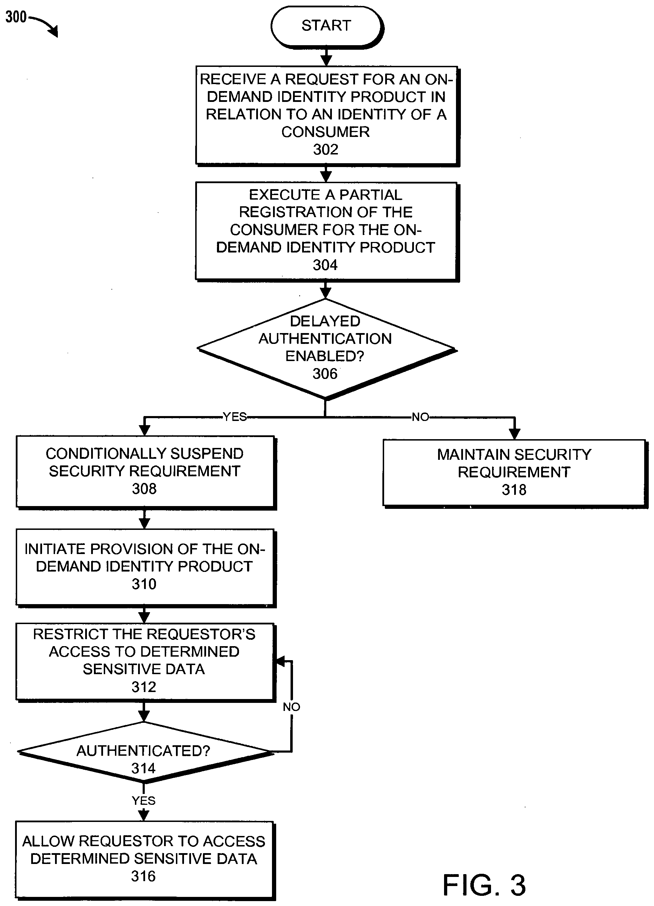

In various embodiments, the fulfillment module 114(1) can additionally maintain and enforce authentication settings 122. As illustrated, the authentication settings 122 can be stored in the storage 108. The authentication settings 122 may be maintained, for example, as a database, flat file, and/or the like. The authentication settings 122 can include a configuration option that indicates, for a given on-demand product, whether delayed authentication is enabled or disabled. In certain embodiments, when delayed authentication is enabled, provision of the given on-demand product can be initiated before authentication occurs or is completed. In many cases, the provision can be initiated substantially immediately after receiving a request for the given on-demand product. In various embodiments, the authentication settings 122 may include varied settings for each on-demand product and/or each category of on-demand product. For example, the authentication settings 122 could indicate that delayed authentication is enabled for credit products and disabled for non-credit products. An example of a process that may be implemented by the fulfillment module 114(1) will be described with respect to FIG. 3.

The delayed-billing module 114(2) logically encapsulates software that maintains and enforces delayed-billing settings 112. As illustrated, the delayed-billing settings 112 can be stored in the storage 108. The delayed-billing settings 112 may be maintained, for example, in a database, flat file, and/or the like. In various embodiments, the delayed-billing settings 112 may include varied settings for particular categories of on-demand products. For example, streaming music may be subject to different settings than a credit-monitoring service. In various embodiments, the delayed-billing settings 112 may be established by consumers, administrators, a provider or vendor for particular on-demand products, or the like.

The delayed-billing settings 112 can take various forms. For example, the delayed-billing settings 112 can include requestor-authentication criteria. In various embodiments, the requestor-authentication criteria may require that all or part of a given consumer's PII be verified as correct prior to billing. Verification of PIT can involve, for example, validating the PII against other records such as, for example, a credit file, public records, and the like. In various embodiments, the requestor-authentication criteria may further require that the requestor be authenticated as an owner of the PII (*i.e.,* that the requestor is the consumer).

By way of further example, the delayed-billing settings 112 can include delivery-verification criteria. The delivery-verification criteria typically require that delivery of the on-demand products be verified before billing occurs. What constitutes delivery of an on-demand product is generally product-specific. Therefore, in a typical embodiment, a product-delivery definition is established relative to each category of on-demand product for which delivery is deemed different. The product-delivery definition may include, for example, one or more product-delivery factors that can be evaluated by the delayed-billing module 114(2) as true or false.

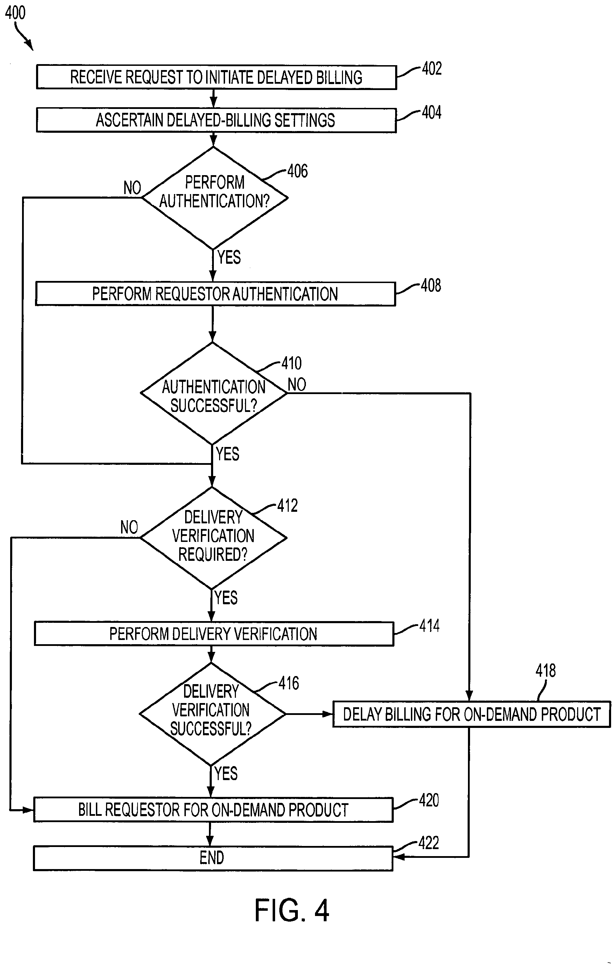

In a typical embodiment, the delayed-billing module 114(2) represents a significant departure from how product-provision systems traditionally bill consumers for on-demand products. Because on-demand products are generally intended to be provided immediately, it is usually desirable to bill immediately. However, in various embodiments, technical and practical issues can unpredictably arise that prevent a particular on-demand product from being provided to a particular consumer. In a typical embodiment, the delayed-billing module 114(2) detects such issues via the delayed-billing settings 112 and acts to delay billing until it can be confirmed that the product-provision system 110 has complied with the delayed-billing settings 112. An example of a delayed-billing process that may be implemented by the delayed-billing module 114(2) will be described with respect to FIG. 4.

Although the fulfillment module 114(1) and the delayed-billing module 114(2) are depicted as two separate software components, in various other embodiments, such software components are organized differently. For example, the fulfillment module 114(1) and the delayed-billing module 114(2) could be merged into a single software component, each be further divided into other software components, or have their collective functionality allocated differently among any number of software components. In addition, although the software application 114 is illustrated singly for illustrative purposes, it should be appreciated that any number of software applications may be utilized to achieve similar functionality.

The one or more client-computing devices 120 are computer systems used by requestors, for example, to request and/or receive the on-demand products. The one or more client-computing devices 120 can include, for example, desktop computers, laptop computers, tablet computers, smart phones, wearable or body-borne computers, and/or the like. The one or more external systems 116 are representative of computer systems from which the product-provision system 110 is operable to interact. For example, in various embodiments, the product-provision system may acquire particular on-demand products from the one or more external systems 116 or obtain information or data necessary to generate particular on-demand products. For example, the one or more external systems 116 may provide the information or data via an application programming interface (API).

In operation, the product-provision system 110 interacts with the one or more client-computing devices 120 to receive requests for on-demand products. In many cases, the requests may be binding requests. A *binding request,* as used herein, refers to a request for an on-demand product for which a requestor has authorized fulfillment and provided payment information (optionally as part of the request). Upon receipt of a binding request for an on-demand product, the product-provision system 110 utilizes the fulfillment module 114(1) to attempt to provide the requested on-demand product in accordance with the authentication settings 122. Optionally in parallel, the product-provision system 110 initiates the delayed-billing module 114(2) so that payment can be extracted in accordance with the delayed-billing settings 112.

Each instance of a system such as, for example, the product-provision system 110 and the one or more external systems 116, may be representative of any combination of computing equipment including, for example, any number of physical or virtual server computers and any number and organization of databases. In addition, it should be appreciated that, in various embodiments, the network 118 can be viewed as an abstraction of multiple distinct networks via which the product-provision system 110 is operable to communicate. For example, the network 118 can include one or multiple communications networks such as, for example, public or private intranets, a public switched telephone network (PSTN), a cellular network, the Internet, or the like.

As described above with respect to FIG. 1, principles described herein can be applied to numerous categories of on-demand products. For illustrative purposes, examples will now be described with respect to on-demand identity products.

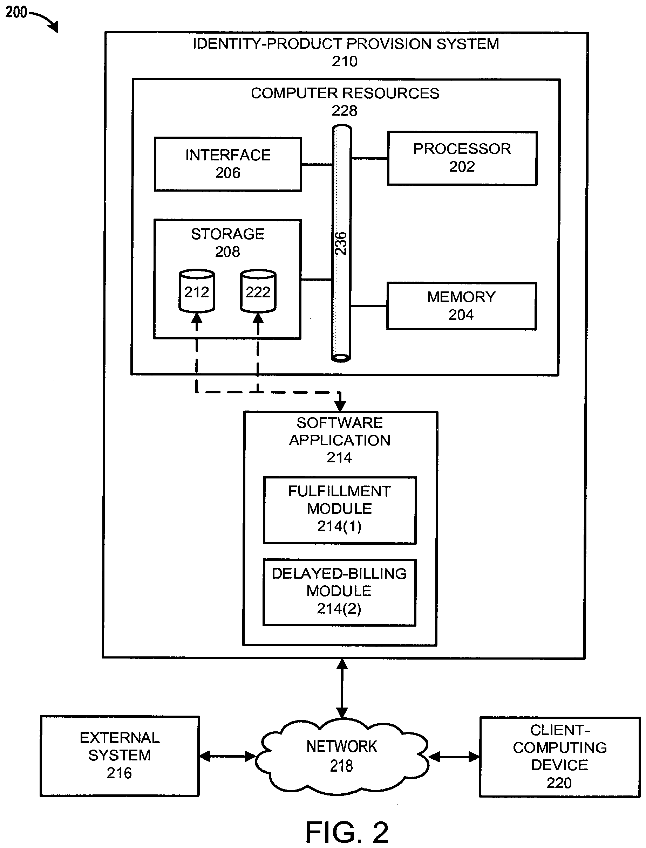

FIG. 2 illustrates an example of a system 200 that can be used for provision and billing of on-demand identity products. The system 200 includes an identity-product provision system 210, one or more external systems 216, and one or more client-computing devices 220. The identity-product provision system 210 includes a software application 214 executing on computer resources 228. The identity-product provision system 210 is operable to communicate with the one or more external systems 216 and the one or more client-computing devices 220 over a network 218. The software application 214 includes a fulfillment module 214(1) and a delayed-billing module 214(2).

In general, the identity-product provision system 210, the one or more external systems 216, the network 218, and the one or more client-computing devices 220 operate as described with respect to the product-provision system 110, the one or more external systems 116, the network 118, and the one or more client-computing devices 120, respectively, of FIG. 1. More specifically, however, the identity-product provision system 210 is operable to provide the on-demand identity products to requestors and implement delayed billing for the on-demand identity products.

The computer resources 228 can operate as described with respect to the computer resources 128. More particularly, processor 202, memory 204, interface 206, and storage 208 can perform functionality described with respect to the processor 102, the memory 104, the interface 106, and the storage 108, respectively, of FIG. 1. Additionally, the storage 208 can include authentication settings 222 and delayed-billing settings 212 that are similar, for example, to the authentication settings 122 and the delayed-billing settings 112, respectively, of FIG. 1.

In certain embodiments, the software application 214 can execute on the computer resources 228 in similar fashion to how the software application 114 is described above to execute on the computer resources 128. The software application 214 can include a fulfillment module 214(1) and a delayed-billing module 214(2). In particular, the fulfillment module 214(1) logically encapsulates software that is operable to generate, acquire, and/or provide the on-demand identity products to consumers. The provided on-demand identity products can include, for example, reports and monitoring services. Examples of functionality that the fulfillment module 214(1) can encapsulate is described in detail in U.S. Patent No. 8,359,278 and in U.S. Patent Application Nos. 12/780,130, 13/093,664, and 13/398,471.

Additionally, in certain embodiments, the fulfillment module 214(1) can establish and maintain the authentication settings 222. In this fashion, the authentication settings 222 can indicate, for each on-demand identity product, whether delayed authentication is enabled or disabled. Because the on-demand identity products generally involve PII and are thus sensitive in nature, authentication typically takes on particular importance. For example, in a typical embodiment, identity products cannot be provided when a requestor has not been authenticated. In certain embodiments, as described in greater detail with respect to FIG. 3, authentication can be conditionally delayed when delayed authentication is enabled.

The delayed-billing module 214(2) logically encapsulates software that maintains and enforces the delayed-billing settings 212. For example, the delayed-billing settings 212 can include requestor-authentication criteria as described with respect to FIG. 1. Because the on-demand identity products generally involve PII and are thus sensitive in nature, the consumer-verification criteria typically takes on particular importance. For example, as described above, in a typical embodiment, identity products cannot be provided when a requestor has not been authenticated. In such cases, it is often determined that the requestor should not be billed. Therefore, the delayed-billing settings 212 can serve as a safeguard to delay billing under such circumstances.

In a typical embodiment, the delayed-billing settings 212 can also include delivery-verification criteria as described with respect to FIG. 1. In a typical embodiment, what constitutes delivery of an on-demand product may be varied between credit and non-credit products. For example, for a credit product, the delayed-billing settings 212 may require, as a delivery-verification factor, that an acknowledgement be received back from one or multiple credit bureaus (*e*.*g*., Experian, TransUnion, and Equifax in the U.S.). By way of further example, for a non-credit product, the delayed-billing settings 212 may require, as a delivery-verification factor, that the consumer has been successfully added to receive a service such as, for example, an identity-monitoring service, coordinated by the fulfillment module 214(1). In various embodiments, technical issues such as, for example, incomplete or inaccurate information from the consumer, may prevent the consumer from being successfully added to receive a service. In this fashion, the delayed-billing module 214(2) can utilize the delayed-billing settings 212 to detect the technical issues and delay billing.

In operation, the identity-product provision system 210 interacts with the one or more client-computing devices 220 to receive requests for on-demand products. In some cases, the requests can be binding requests that result, for example, from enrollment as described in U.S. Patent Application No. 13/093,663 or from registration and/or subscription as described with respect to U.S. Patent No. 8,359,278. Upon receipt of a binding request for an on-demand identity product, the identity-product provision system 210 utilizes the fulfillment module 214(1) to provide the requested on-demand identity product. Optionally in parallel, the identity-product provision system 210 initiates the delayed-billing module 214(2) so that payment can be extracted in accordance with the delayed-billing settings 212.

FIG. 3 illustrates an example of a process 300 for performing delayed authentication. The process 300 may be performed by a fulfillment module such as, for example, the fulfillment module 114(1) of FIG. 1 or the fulfillment module 214(1) of FIG. 2. The fulfillment module is typically resident and executing on a computer system such as, for example, the product-provision system 110 of FIG. 1 or the identity-product provision system 210 of FIG. 2. The process 300 begins at block 302.

At block 302, the fulfillment module receives, from a requestor, a request for an on-demand identity product in relation to an identity of a consumer. For example, the request can be a request for a credit or non-credit product as described above. In some cases, the request can be a binding request for an on-demand identity product as described above. The request typically includes, or specifies, PII of the consumer such as, for example, a name, SSN, and/or the like.

In certain embodiments, the on-demand identity product, as part of its operation, generates, receives, or processes sensitive data related to the consumer. Consequently, the requestor typically asserts an identity for purposes of specifying who the requestor is. The asserted identity may be, for example, the identity of the consumer, an identity of a parent or legal guardian of the consumer, and/or the like. In some cases, the on-demand identity product is intended to be provided only to the consumer specified in the request. In these cases, the asserted identity may be assumed to be that of the consumer. In a typical embodiment, the on-demand identity product includes a security requirement that requires the requestor to be authenticated as having the asserted identity before the on-demand identity product can be provided.

At block 304, the fulfillment module executes a partial registration of the consumer for the on-demand identity product. The partial registration can include, for example, the fulfillment module processing and storing information from the request in storage such as the storage 108 or 208 of FIGS 1 and 2, respectively, and/or performing other prerequisites in preparation for providing the on-demand identity product. In general, the registration may be considered partial as a result of omitting one or more prerequisites for providing the on-demand identity product to the requestor. For example, for purposes of the example of the process 300, the partial registration may be assumed to omit satisfaction of the security requirement that the requestor be authenticated.

At decision block 306, the fulfillment module determines whether delayed authentication is enabled for the on-demand identity product. For example, the block 306 may include the fulfillment module accessing authentication settings such as, for example, the authentication settings 122 of FIG. 1 or the authentication settings 222 of FIG. 2. From the authentication settings, the fulfillment module can typically determine whether delayed authentication is enabled or disabled. If it is determined at the decision block 306 that delayed authentication is not enabled (*e.g.,* disabled), the process 300 proceeds to block 318. At block 318, the fulfillment module maintains the security requirement. In other words, at block 318, the fulfillment module typically does not initiate provision of the on-demand identity product but rather enforces the security requirement.

If it is determined at the decision block 306 that delayed authentication is enabled for the on-demand identity product, the process 300 proceeds to block 308. At block 308, the fulfillment module conditionally suspends the security requirement. In general, the block 308 involves the fulfillment module instituting a delayed-authentication workflow so as to allow provision of the on-demand identity product. In particular, the delayed-authentication workflow typically imposes conditions that limit what the requestor can access while the security requirement remains unsatisfied. For example, the fulfillment module can allow restricted access to the on-demand product conditioned upon, for example, whether data to be presented or made accessible is deemed sensitive. Satisfaction of the security requirement can be delayed, for example, until such a time that data deemed sensitive is to be presented or made accessible to the requestor.

At block 310, the fulfillment module initiates provision of the on-demand identity product to the requestor. For example, when the on-demand identity product is a monitoring service, the block 310 can include adding the identified consumer to internal systems that provide the monitoring service.

At block 312, the fulfillment module restricts the requestor's access to determined sensitive data resulting from the provision of the on-demand identity product. For example, in embodiments in which the on-demand identity product is a monitoring service, the on-demand identity product may periodically generate alerts such as, for example, identity alerts. In these embodiments, the determined sensitive data may be information underlying the identity alerts such as, for example, what detected action(s) or other item(s) resulted in the identity alerts being triggered. According to this example, the block 312 can include blocking access by the requestor to the determined sensitive data. Conversely, the requestor may be allowed access to sanitized data resulting from the provision of the on-demand identity product. Sanitized data can include, for example, information related to the existence of the identity alert. The sanitized data typically excludes the determined sensitive data. In many cases, the requestor may be prompted to authenticate upon an attempt by the requestor to access the determined sensitive data.

At decision block 314, the fulfillment module determines whether the requestor has been authenticated as required by the security requirement. If not, the process 300 returns to block 312 and proceeds as described above. In various embodiments, the process 300 can remain at blocks 312-314 for so long as the requestor remains unauthenticated. In some cases, the process 300 can be terminated after a certain period of time, after a certain number of unsuccessful authentication attempts, by an administrator, by a network element in communication with the fulfillment module, and/or when other stop criteria is met.

If it is determined at the decision block 314 that the requestor has been authenticated as required by the security requirement, the process 300 proceeds to block 316. At block 316, the fulfillment module allows the requestor to access the determined sensitive data. Stated somewhat differently, the fulfillment module allows the requestor to be provided the on-demand identity product according to the standard workflow rather than according to the delayed-authentication workflow.

Advantageously, in certain embodiments, processes such as the process 300 enable improved performance of a computer system such as the system 100 of FIG. 1 or the system 200 of FIG. 2. For example, requestors using a client-computing device such as the one or more client-computing devices 120 or 220 of FIGS. 1 and 2, respectively, can realize an improved end-user experience as a result of faster provision of on-demand products. In some cases, the improved end-user experience can be manifested in faster transaction completion, faster end-to-end response times, less time elapsed between the receipt of a request for a particular on-demand product and an initiated provision of the particular on-demand product, and/or the like. In addition, computer resources of the computer system (*e.g*., the computer resources 128 or 228 of FIGS. 1 and 2, respectively) can be more efficiently utilized, for example, via fewer abandoned registrations for on-demand identity products, fewer resumed or restarted registrations, etc. Moreover, in certain embodiments, the above-listed advantages and other advantages can be realized without sacrificing data security.

Although the process 300 is described with respect to on-demand identity products for illustrative purposes, it should be appreciated that similar processes can be applied to other types of on-demand products. For example, performance improvements and other advantages described above can be realized for on-demand products relating to text, graphics, photos, video, audio, code, software applications, documents, access to cloud applications, and the like. In addition, in some cases, as an alternative to conditionally suspending a security requirement that a requestor be authenticated, the security requirement can be temporarily lifted. For example, provision of a particular on-demand product can be initiated according to its standard workflow. According to this example, if the requestor is not authenticated within a certain period of time, or other criteria is met, the provision of the particular on-demand product can be terminated.

FIG. 4 illustrates an example of a process 400 for delayed billing. The process 400 may be performed by a delayed-billing module such as, for example, the delayed-billing module 114(2) of FIG. 1 or the delayed-billing module 214(2) of FIG. 2. The delayed-billing module is typically resident and executing on a computer system such as, for example, the product-provision system 110 of FIG. 1 or the identity-product provision system 210 of FIG. 2.

At block 402, the delayed-billing module receives a request to initiate delayed billing. In various cases, the request to initiate delayed billing can be received from a fulfillment module (*e*.*g*., the fulfillment module 114(1) or 214(1) of FIGS. 1 and 2, respectively), from a product-provision system generally (*e*.*g*., the product-provision system 110 of FIG. 1 or the identity-product provision system 210 of FIG. 2), responsive to a command from an administrator or a component in communication with the delayed-billing module, and/or the like. In general, the request to initiate delayed billing is received in connection with a binding request for an on-demand product from a requestor. The binding request typically identifies a consumer to whom the request relates. For example, the binding request may identify the consumer via PII. At block 404, the delayed-billing module ascertains delayed-billing settings that are applicable to the requested on-demand product. The delayed-billing settings may be acquired from the delayed billing settings 112 of FIG. 1 or the delayed billing settings 212 of FIG. 2.

At decision block 406, the delayed-billing module determines whether requestor authentication needs to be performed. In various embodiments, requestor authentication is a prerequisite to billing for certain types of on-demand products and is specified as such in the delayed-billing settings. Even if the delayed-billing settings specify requestor authentication, requestor authentication may not need to be performed because, for example, requestor authentication has already been performed as part of requesting the requested on-demand product. If it is determined at decision block 406 that requestor authentication does not need to be performed, either because it is not required or because it has already been performed, the process 400 proceeds to block 412. If it is determined at decision block 406 that requestor authentication is required, the process 400 proceeds to block 408.

At block 408, the delayed-billing module performs requestor authentication. Examples of authentication that may occur at block 408 are described in U.S. Patent No. 7,340,042 and U.S. Patent Application No. 13/093,664. At decision block 410, the delayed-billing module determines whether the requestor authentication was successful. If it is determined at decision block 410 that the requestor was not successfully authenticated, the process 400 proceeds to block 422 and ends. If it is determined at decision block 410 that the requestor was successfully authenticated, the process 400 proceeds to block 412.

At decision block 412, the delayed-billing module determines whether the delayed-billing settings require delivery verification. If not, the process 400 proceeds to block 420. If it is determined at decision block 412 that the delayed-billing settings require delivery verification, the process 400 proceeds to block 414. At block 414, the delayed-billing module performs delivery verification. In a typical embodiment, the delivery verification involves evaluating one or more product-delivery factors contained within the delayed-billing settings. The one or more product-delivery factors can include, for example, whether the identified consumer has been successfully added to internal systems that provide, for example, a monitoring service, whether the on-demand product has been transmitted in its entirety to the requestor, whether the on-demand product is accessible to the requestor, and the like.

At decision block 416, the delayed-billing module determines whether the delivery verification was successful. In a typical embodiment, the delivery verification is deemed successful if each of the one or more product-delivery factors evaluate to an expected value of true or false, as applicable. In many cases, initiation of provision of an on-demand identity product as described, for example, with respect to block 310 of FIG. 3, may satisfy the one or more product-delivery factors. If the delivery verification was not successful, the process 400 proceeds to block 418. At block 418, the delayed-billing module delays billing the requestor for the requested on-demand product. In various embodiments, the delayed-billing process 400 is re-run later, for example, as a batch billing process for all unbilled requestors. At block 422, the process 400 ends.

If it is determined at decision block 416 that the delivery verification was successful, the process 400 proceeds to block 420. At block 420, the requestor is billed for the requested on-demand product. At block 422, the process 400 ends.

In some embodiments, the process 300 of FIG. 3 and the process 400 of FIG. 4 can be coordinated processes executing on a computer system such as the product-provision system 110 of FIG. 1 or the identity-product provision system 210 of FIG. 2 (*e.g.,* as part of the software application 114 or the software application 214). In these embodiments, in some cases, delayed authentication as described with respect to the process 300 can enable faster billing with respect to the process 400. For example, if initiation of provision of an on-demand identity product as described with respect to block 310 of FIG. 3 is sufficient to satisfy product-delivery factors as described with respect to blocks 414-416 of FIG. 4, it may be possible to bill a given requestor at an earlier point than would otherwise be feasible without delayed authentication. Advantageously, in certain embodiments, time elapsed between receipt of requests and billing can be reduced, billing operations can be streamlined, and idle time of computer resources (*e*.*g*., the computer resources 128 or 228 of FIGS. 1 and 2, respectively) can be reduced.

In certain embodiments, even apart from delayed billing, delayed authentication as described with respect to the process 300 can substantially increase the probability that delivery of a particular on-demand product occurs. In these cases, a risk of premature electronic billing (*e*.*g*., billing that occurs before a product is successfully delivered) can be significantly reduced even in cases in which delayed billing as described above is not utilized.

Any suitable combination of various embodiments, or the features thereof, is contemplated. For example, any of the systems or devices disclosed herein can include features of other embodiments. For example, the product-provision system 110 and its components may have any of the features described herein with respect to the identity-product provision system 210 and its components. As another example, any blocks or steps disclosed in a process described herein may be used in other processes described herein. Thus, a block of one of the processes described with respect to FIGS. 3-4 may be used in any of the processes described herein.

Depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. Although certain computer-implemented tasks are described as being performed by a particular entity, other embodiments are possible in which these tasks are performed by a different entity.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment.

While the above detailed description has shown, described, and pointed out novel features as applied to various embodiments, it will be understood that various omissions, substitutions, and changes in the form and details of the devices or algorithms illustrated can be made. As will be recognized, the processes described herein can be embodied within a form that does not provide all of the features and benefits set forth herein, as some features can be used or practiced separately from others. The scope of protection is defined by the appended claims rather than by the foregoing description. All changes which come within the meaning and range of equivalency of the claims are to be embraced within their scope.

## Claims

1. A method comprising, by a computer system:
receiving, from a requestor, a request for an on-demand identity product, the request comprising personally identifying information (PII) of the consumer;
executing, using the PII, a partial registration of the consumer for the on-demand identity product, the partial registration omitting an initiation of authenticating the requestor;
responsive to a determination that delayed authentication is enabled for the on-demand identity product, delaying authentication of the requestor;
based on the partial registration, initiating provision of the on-demand identity product to the requestor, the provision comprising processing data related to the identity of the consumer (310);
allowing the requestor to access non-sensitive data resulting from the initiated provision while the authentication remains unsatisfied (312);
blocking the requestor from accessing sensitive data resulting from the initiated provision;
before the requestor is authenticated, determining that electronic delivery of the on-demand identity product to the requestor is successful based, at least in part, on determining that the requestor has been successfully added to internal systems that provide the on-demand identity product;
responsive to a determination that the sensitive data is to be presented or made accessible to the requestor, requesting the authentication of the requestor;
responsive to a determination that the requester is authenticated, allowing the requestor to access the sensitive data (314, 316); and
responsive to a determination that the requester is not authenticated, continue blocking the requestor from accessing the sensitive data at least until the requester is authenticated (314, 312);

2. The method of claim 1, wherein the sensitive data that is accessible to the requestor after the requestor is authenticated comprises a subset of the sensitive data that the requestor was previously blocked from accessing.

3. The method of claim 1, wherein allowing the requestor to access the sensitive data comprises allowing the requestor to access sanitized data resulting from the initiated provision.

4. The method of claim 3, wherein the sanitized data comprises an identity alert.

5. The method of claim 1, comprising, responsive to a determination that delayed authentication is disabled for the on-demand identity product, requiring that the at least one security requirement be satisfied before initiating provision of the on-demand identity product.

6. The method of claim 1, further comprising:
determining whether delayed authentication is enabled for the on-demand identity product; and
responsive to a determination that delayed authentication is enabled for the on-demand identity product, delaying authentication of the requestor such that the authentication of the requestor is performed after initiating provision of the on- demand identity product.

7. An identity-product provision system comprising:
at least one computer processor, wherein the at least one computer processor is configured to implement the method of any one of claims 1-6.

8. A computer-program product comprising a non-transitory computer-usable medium having computer-readable program code embodied therein, the computer- readable program code adapted to be executed to implement a method of any one of claims 1-6.

## Patentansprüche

1. Ein Verfahren, das, durch ein Computersystem, Folgendes beinhaltet:
Empfangen, von einem Anforderer, einer Anforderung von einem On-Demand-Identitätsprodukt, wobei die Anforderung persönliche identifizierende Informationen (Personally Identifying Information, PII) des Verbrauchers beinhaltet;
Ausführen, unter Verwendung der PII, einer Teilregistrierung des Verbrauchers für das On-Demand-Identitätsprodukt, wobei die Teilregistrierung eine Initiierung der Authentifizierung des Anforderers auslässt;
als Reaktion auf eine Bestimmung, dass eine verzögerte Authentifizierung für das On-Demand-Identitätsprodukt aktiviert ist, Verzögern der Authentifizierung des Anforderers;
auf der Basis der Teilregistrierung, Initiieren der Bereitstellung des On-Demand-Identitätsprodukts an den Anforderer, wobei die Bereitstellung das Verarbeiten von Daten in Bezug auf die Identität des Verbrauchers beinhaltet (310);
Ermöglichen des Zugriffs durch den Anforderer auf nicht sensible Daten, die sich aus der initiierten Bereitstellung ergeben, während die Authentifizierung unerfüllt bleibt (312);
Blockieren des Zugriffs durch den Anforderer auf sensible Daten, die sich aus der initiierten Bereitstellung ergeben;
vor der Authentifizierung des Anforderers, Bestimmen, dass die elektronische Lieferung des On-Demand-Identitätsprodukts an den Anforderer erfolgreich ist, mindestens teilweise auf der Basis des Bestimmens, dass der Anforderer internen Systemen, die das On-Demand-Identitätsprodukt bereitstellen, erfolgreich hinzugefügt worden ist;
als Reaktion auf eine Bestimmung, dass die sensiblen Daten dem Anforderer präsentiert oder zugänglich gemacht werden sollen, Anfordern der Authentifizierung des Anforderers;
als Reaktion auf eine Bestimmung, dass der Anforderer authentifiziert ist, Ermöglichen des Zugriffs auf die sensiblen Daten durch den Anforderer (314, 316); und
als Reaktion auf eine Bestimmung, dass der Anforderer nicht authentifiziert ist, Fortsetzen des Blockierens des Zugriffs auf die sensiblen Daten durch den Anforderer mindestens so lange, bis der Anforderer authentifiziert ist (314, 312).

2. Verfahren gemäß Anspruch 1, wobei die sensiblen Daten, die, nachdem der Anforderer authentifiziert wurde, für den Anforderer zugänglich sind, eine Teilmenge der sensiblen Daten, auf die der Zugriff durch den Anforderer zuvor blockiert war, beinhalten.

3. Verfahren gemäß Anspruch 1, wobei das Ermöglichen des Zugriffs auf die sensiblen Daten durch den Anforderer das Ermöglichen des Zugriffs auf bereinigte Daten, die sich aus der initiierten Bereitstellung ergeben, durch den Anforderer beinhaltet.

4. Verfahren gemäß Anspruch 3, wobei die bereinigten Daten eine Identitätswarnung beinhalten.

5. Verfahren gemäß Anspruch 1, beinhaltend als Reaktion auf eine Bestimmung, dass eine verzögerte Authentifizierung für das On-Demand-Identitätsprodukt deaktiviert ist, die Forderung, dass die mindestens eine Sicherheitsforderung erfüllt wird, bevor die Bereitstellung des On-Demand-Identitätsprodukts initiiert wird.

6. Verfahren gemäß Anspruch 1, das ferner Folgendes beinhaltet:
Bestimmen, ob eine verzögerte Authentifizierung für das On-Demand-Identitätsprodukt aktiviert ist; und
als Reaktion auf eine Bestimmung, dass eine verzögerte Authentifizierung für das On-Demand-Identitätsprodukt aktiviert ist, Verzögern der Authentifizierung des Anforderers, sodass die Authentifizierung des Anforderers nach der Initiierung der Bereitstellung des On-Demand-Identitätsprodukts durchgeführt wird.

7. Ein Identitätsprodukt-Bereitstellungssystem, das Folgendes beinhaltet:
mindestens einen Computerprozessor, wobei der mindestens eine Computerprozessor konfiguriert ist, um das Verfahren gemäß einem der Ansprüche 1-6 zu implementieren.

8. Ein Computerprogrammprodukt, beinhaltend ein nicht transitorisches computerverwendbares Medium, das einen computerlesbaren Programmcode darin enthält, wobei der computerlesbare Programmcode angepasst ist, um dahingehend ausgeführt zu werden, ein Verfahren gemäß einem der Ansprüche 1-6 zu implementieren.

## Revendications

1. Un procédé comprenant, par un système informatique :
le fait de recevoir, d'un demandeur, une demande d'un produit d'identité à la demande, la demande comprenant des informations d'identification personnelle (PII) du consommateur ;
le fait d'exécuter, à l'aide des PII, un enregistrement partiel du consommateur pour le produit d'identité à la demande, l'enregistrement partiel omettant un lancement d'authentification du demandeur ;
en réponse à une détermination qu'une authentification différée est activée pour le produit d'identité à la demande, le fait de différer une authentification du demandeur ;
sur la base de l'enregistrement partiel, le fait de lancer la fourniture du produit d'identité à la demande au demandeur, la fourniture comprenant le fait de traiter des données relatives à l'identité du consommateur (310);
le fait d'autoriser l'accès du demandeur à des données non sensibles résultant de la fourniture lancée pendant que l'authentification reste non satisfaite (312) ;
le fait de bloquer l'accès du demandeur à des données sensibles résultant de la fourniture lancée ;
avant que le demandeur ne soit authentifié, le fait de déterminer qu'une livraison électronique du produit d'identité à la demande au demandeur est un succès sur la base, au moins en partie, d'une détermination que le demandeur a été ajouté avec succès aux systèmes internes qui fournissent le produit d'identité à la demande ;
en réponse à une détermination que les données sensibles doivent être présentées ou rendues accessibles au demandeur, le fait de demander l'authentification du demandeur ;
en réponse à une détermination que le demandeur est authentifié, le fait d'autoriser l'accès du demandeur aux données sensibles (314, 316) ; et
en réponse à une détermination que le demandeur n'est pas authentifié, le fait de continuer à bloquer l'accès du demandeur aux données sensibles au moins jusqu'à ce que le demandeur soit authentifié (314, 312).

2. Le procédé de la revendication 1, dans lequel les données sensibles qui sont accessibles au demandeur une fois le demandeur authentifié comprennent un sous-ensemble des données sensibles auxquelles l'accès du demandeur était précédemment bloqué.

3. Le procédé de la revendication 1, dans lequel le fait d'autoriser l'accès du demandeur aux données sensibles comprend le fait d'autoriser l'accès du demandeur à des données assainies résultant de la fourniture lancée.

4. Le procédé de la revendication 3, dans lequel les données assainies comprennent une alerte d'identité.

5. Le procédé de la revendication 1, comprenant, en réponse à une détermination qu'une authentification différée est désactivée pour le produit d'identité à la demande, le fait d'exiger que l'au moins une exigence de sécurité soit satisfaite avant de lancer la fourniture du produit d'identité à la demande.

6. Le procédé de la revendication 1, comprenant en sus :
le fait de déterminer si une authentification différée est activée pour le produit d'identité à la demande ; et
en réponse à une détermination qu'une authentification différée est activée pour le produit d'identité à la demande, le fait de différer une authentification du demandeur de telle sorte que l'authentification du demandeur est effectuée après avoir lancé la fourniture du produit d'identité à la demande.

7. Un système de fourniture de produit d'identité comprenant :
au moins un processeur informatique, l'au moins un processeur informatique étant configuré pour mettre en œuvre le procédé de n'importe laquelle des revendications 1 à 6.

8. Un produit programme informatique comprenant un support utilisable par ordinateur non transitoire dans lequel est incorporé un code de programme lisible par ordinateur, le code de programme lisible par ordinateur étant conçu pour être exécuté afin de mettre en œuvre un procédé de n'importe laquelle des revendications 1 à 6.
